(19) Europäisches Patentamt
European Patent Office
Office européen des brevets

(11) **EP 3 679 267 B1**

(12) **EUROPÄISCHE PATENTSCHRIFT**

(45) Veröffentlichungstag und Bekanntmachung des Hinweises auf die Patenterteilung:
**22.04.2026   Patentblatt 2026/17**

(21) Anmeldenummer: **19779454.8**

(22) Anmeldetag: **26.09.2019**

(51) Internationale Patentklassifikation (IPC):
**F16F 1/38** (2006.01)

(52) Gemeinsame Patentklassifikation (CPC):
**F16F 1/38**

(86) Internationale Anmeldenummer:
**PCT/EP2019/076035**

(87) Internationale Veröffentlichungsnummer:
**WO 2020/108825 (04.06.2020 Gazette 2020/23)**

(54) **LAGER SOWIE FAHRZEUGAUFHÄNGUNG UMFASSEND SOLCH EIN LAGER**

BEARING AND VEHICLE SUSPENSION COMPRISING SUCH A BEARING

PALIER AINSI QUE SUSPENSION DE VÉHICULE COMPRENANT UN TEL PALIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2018   DE 102018130572**

(43) Veröffentlichungstag der Anmeldung:
**15.07.2020   Patentblatt 2020/29**

(73) Patentinhaber: **Vibracoustic SE**
**69469 Weinheim (DE)**

(72) Erfinder:
• **Werner, Philipp**
  **21339 Lüneburg (DE)**

• **Kardoes, Hilrich**
  **21423 Winsen (DE)**

(74) Vertreter: **Patentanwälte Olbricht Buchhold Keulertz**
**Partnerschaft mbB**
**Neue Mainzer Straße 75**
**60311 Frankfurt am Main (DE)**

(56) Entgegenhaltungen:
EP-A1- 0 410 941     DE-A1- 3 840 176
JP-A- H05 155 263     KR-B1- 101 372 085
US-A- 5 158 271     US-B2- 6 641 119

EP 3 679 267 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Lager zur Isolation von Vibrationen entlang einer dynamischen Hauptlastrichtung, welches eine zylindrische Hülse, einen Kern, der in der Hülse angeordnet ist, und einen Elastomerkörper, der den Kern mit der Hülse federnd verbindet, aufweist. Die Erfindung betrifft ferner eine Fahrzeugaufhängung, welche ein erstes Bauteil, das Vibrationen in einer dynamischen Hauptlastrichtung erzeugt, ein Chassis und ein Lager, so wie es voranstehend beschrieben wurde und welches das erste Bauteil federnd an dem Chassis lagert, umfasst.

Aggregatelager, wie beispielsweise Hinterachsdifferentiallager, Getriebelager oder Lager für einen Elektromotor, sind aus dem Stand der Technik bekannt. Das Design dieser Lager wird bisher für jede Anwendung eigens angepasst. Darüber hinaus sind aus dem Stand der Technik Linear- oder Drehschwingungstilger als separate und gut abstimmbare Bauteile bekannt, wie dies beispielsweise in der DE 2 716 485 C2 beschrieben wird.

KR 101 372 085 B1 offenbart ein Buchsenlager, bei dem zur Erhöhung der Steifigkeit eines Stegs Zwischenbleche in diesen Steg eingebaut sind. US 6 641 119 B2 offenbart ein Buchsenlager, bei dem zur Verminderung von ungewollten Resonanzeigenschaften Massenteile lose in einem Steg angeordnet sind.

Aufgabe der Erfindung ist es, ein Lager zu schaffen, bei dem ein Frequenzbereich guter Isolation einfach eingestellt werden kann.

Die Aufgabe wird durch das Lager gemäß Anspruch 1 sowie durch die Fahrzeugaufhängung gemäß Anspruch 9 gelöst. Die abhängigen Ansprüche 2 bis 8 beschreiben bevorzugte Ausführungsformen des Lagers gemäß Anspruch 1.

Ein Lager zur Isolation von Vibrationen entlang einer dynamischen Hauptlastrichtung umfasst eine zylindrische Hülse, einen Kern, der in der Hülse angeordnet ist, und einen Elastomerkörper, der den Kern mit der Hülse federnd verbindet. Der Elastomerkörper weist erste Stege, welche in der dynamischen Hauptlastrichtung zwischen dem Kern und der Hülse angeordnet sind, und zweite Stege auf, welche in einem Winkel, insbesondere senkrecht, zu den ersten Stegen zwischen dem Kern und der Hülse angeordnet sind. Ausschließlich in den zweiten Stegen ist ein Massenelement angeordnet. Ferner ist in jedem der zweiten Stege ein Massenelement angeordnet. Das Massenelement hat eine flächige Ausgestaltung und verläuft parallel zu der Hülse. Die Summe der Längen der Teilabschnitte der zweiten Stege in der radialen Richtung ist größer als die Summe der Längen der ersten Stege in der radialen Richtung.

Eine Fahrzeugaufhängung umfasst ein erstes Bauteil, das Vibrationen in der dynamischen Hauptlastrichtung erzeugt, ein Chassis und ein Lager, so wie es oben beschrieben wurde und welches das erste Bauteil federnd an dem Chassis lagert. Die ersten Stege des Lagers erstecken sich dabei in Richtung der dynamischen Hauptlastrichtung.

Die Erfindung betrifft ferner ein Fahrzeug mit einer solchen Fahrzeugaufhängung.

Als dynamische Hauptlastrichtung oder im Weiteren auch nur Hauptlastrichtung, wird dabei die Richtung bezeichnet, in der die größten dynamischen Schwingungseinträge in das Lager im normalen, bestimmungsgemäßen Arbeitszustand des Lagers auftreten. Nicht gemeint als größte dynamische Schwingungseinträge sind hingegen die bei Sonderereignissen oder im Crashfall auftretenden Maximallasten. Auch nicht zwingend muss die dynamische Hauptlastrichtung mit der Richtung der Gewichtskraft übereinstimmen. Für das Lager kann die dynamische Hauptlastrichtung durch diejenige Symmetrieachse definiert werden, welche die mit den Massenelementen ausgerüsteten zweiten Stege mit größter Übereinstimmung aufeinander abbildet. Dementsprechend können diese mit mindestens einem Massenelement ausgerüsteten Stege als zweite Stege bezeichnet werden, während die Stege in der dynamischen Hauptlastrichtung als erste Stege bezeichnet werden können.

Vorteil der Erfindung ist, dass die ersten Stege, welche bevorzugt in der dynamischen Hauptlastrichtung angeordnet sind, die Steifigkeitseigenschaften des Lagers in der dynamischen Hauptlastrichtung maßgeblich bestimmen. Zwar tragen die zweiten Stege ebenfalls zu der Steifigkeit in der dynamischen Hauptlastrichtung bei, allerdings ist der Einfluss des Massenelements für die Steifigkeit in der dynamischen Hauptlastrichtung gering. Somit ist es möglich, insbesondere die Masse des Massenelements für die jeweilige Anwendung zu ändern, ohne dabei die Steifigkeit des Lagers in der dynamischen Hauptlastrichtung wesentlich zu beeinflussen.

Das Massenelement wirkt dabei als Tilgermasse, welche die dynamische Steifigkeit des Lagers herabsetzt. Dieses geschieht kurz oberhalb einer Elastomereigenfrequenz mindestens einer der zweiten (Elastomer-) Stege durch die Anregung gegenphasiger Schwingungen. Der Frequenzbereich, in dem die Isolation verbessert wird, hängt dabei von der Eigendämpfung des Elastomers, das heißt des zweiten Stegs, ab; ein typischer Frequenzbereich guter Isolation ist dabei kurz oberhalb der Eigenfrequenz bis zu Faktor $\sqrt{2}$ mal der Eigenfrequenz. Somit ist es möglich, die dynamische Steifigkeit des Lagers durch Variation der Masse des Masseelements in einem definierten Frequenzbereich gezielt abzusenken, da die Eigenfrequenz $\omega$ bei nahezu gleichbleibender Federkonstante $c$ durch das Massenelement näherungsweise nach folgender Formel bestimmt wird:

$$\omega = \sqrt{(c/m)}.$$

Dadurch, dass diese Eigenfrequenz durch die Anpassung der Masse des Massenelements eingestellt werden kann, kann somit ein standardisiertes Lager für verschiedene Anwendungen, d. h. für verschiedene Frequenzbereiche mit hohen Isolationsanforderungen, verwendet werden. Zusammengefasst kann ein einheitliches Elastomerdesign des Lagers verwendet werden und für verschiedene Isolationsfrequenzbereiche bei gegebener Steifigkeit c durch Anpassung der schwingenden Masse (Massenelements) eingestellt werden. Dabei muss das Grunddesign des Lagers nicht verändert werden. Dies vereinfacht die Berechnung und Auslegung des Lagers und kann im Einzelfall auch den Einsatz einheitlicher Bauteile und damit ein kostengünstiges Design ermöglichen.

Dieser Effekt, wonach die Absenkung der Steifigkeit in einem Frequenzbereich weitestgehend unabhängig von der Steifigkeit des Lagers in der dynamischen Hauptlastrichtung eingestellt werden kann, ermöglicht es auch, ein Lager herzustellen, bei dem die Steifigkeit des Lagers in der dynamischen Hauptlastrichtung weitestgehend unabhängig von dem Frequenzbereich guter Isolation eingestellt werden kann. Diese Entkopplung der bei einem herkömmlichen Lager miteinander verschränkten Eigenschaften vereinfacht die Planung des Lagers erheblich.

Da die dynamische Steifigkeit kurz oberhalb der Elastomereigenfrequenz abgesenkt wird, da in diesem Frequenzbereich das zur Anregung gegenphasig schwingende Elastomer Teile der Anregung kompensiert, zeichnet sich ein solches Lager durch eine besonders gute Isolationswirkung in dem Frequenzbereich der gezielt abgesenkten dynamischen Steifigkeit bis ca. $\sqrt{2}$ mal Elastomereigenfrequenz aus.

Das Massenelement kann nicht nur in der dynamischen Hauptlastrichtung schwingen, sondern auch in einer axialen Richtung. Somit kann auch eine in der axialen Richtung gegenphasige Schwingung kurz oberhalb der axialen Eigenfrequenz des Schwingungssystems aus zweitem Steg und Massenelement zur Absenkung der dynamischen Steifigkeit und damit besseren Isolation genutzt werden.

Das Lager kann insbesondere als Aggregatelager bezeichnet werden. Das Lager kann Teil einer Fahrzeugaufhängung sein, an welchem das erste Bauteil an einem Chassis befestigt werden kann. Das erste Bauteil kann beispielsweise ein Differential, ein Getriebe oder einen Elektromotor umfassen. Die Vibrationen, welche das erste Bauteil erzeugt, können beispielsweise durch Eingriff von Zahnrädern in dem ersten Bauteil erzeugt werden. Die Vibrationen werden insbesondere in der dynamischen Hauptlastrichtung übertragen. Die dynamische Hauptlastrichtung wird somit durch das erste Bauteil festgelegt und kann somit einfach bestimmt werden.

Die Fahrzeugaufhängung kann Teil eines Fahrzeugs sein. Die Fahrzeugaufhängung kann auch als Fahrzeugeinheit bezeichnet werden.

Das Chassis im Sinne der vorliegenden Erfindung wird so wie im Stand der Technik üblich verwendet. Als Fahrgestell, Rahmen, Chassis, Hilfsrahmen oder Untergestell werden die tragenden Teile von Fahrzeugen bezeichnet. Das Chassis stellt ein Element des Fahrzeugs dar, an welchem das erste Bauteil befestigt ist. Um eine Übertragung der Vibrationen, die durch das erste Bauteil erzeugt werden, auf das Chassis zu verhindern, ist das Lager vorgesehen. Das Lager verbindet das erste Bauteil federnd mit dem Chassis.

Das Chassis oder das erste Bauteil weist insbesondere eine zylindrische Aufnahme auf, in der das Lager eingesetzt wird. Eine Außenfläche der zylindrischen Hülse steht somit mit der zylindrischen Aufnahme des Chassis oder des ersten Bauteils in Eingriff. Die zylindrische Hülse dient somit zur Anbringung des Lagers an dem Chassis oder dem ersten Bauteil.

Der Kern weist vorzugsweise eine Durchgangsöffnung auf, welche sich in einer axialen Richtung erstreckt. Durch die Durchgangsöffnung des Kerns kann ein Bolzen eingeführt werden, mittels welchem der Kern an dem ersten Bauteil oder dem Chassis befestigt werden kann. Dazu können Muttern oder andere Befestigungsmittel verwendet werden, um den Bolzen oder ein anderes Befestigungselement sicher an dem ersten Bauteil oder dem Chassis zu fixieren.

Eine radiale Richtung steht senkrecht auf der axialen Richtung. Eine Umfangsrichtung erstreckt sich um die axiale Richtung. Die zylindrische Hülse erstreckt sich vorzugsweise in der axialen Richtung und der Umfangsrichtung. Die Hülse ist vorzugsweise ringförmig in einer Querschnittsansicht.

Der Kern weist vorzugsweise eine Außenfläche auf, die mit der Krümmung der Außenfläche der Hülse weitestgehend korrespondiert. Dabei können zwar die Krümmungen der korrespondierenden Flächen übereinstimmen, jedoch wird der Mittelpunkt der Krümmungen näherungsweise um die radiale Ausdehnung der zwischen den korrespondierenden Flächen angeordneten Stege verschoben. Werden die Schnittpunkte dieser vier Kernmantelflächen gleicher Krümmung mit unterschiedlichen Krümmungsmittelpunkten nun mit verrundeten Übergängen versehen, erinnert die Kernaußenfläche in einer Querschnittsansicht annähernd an eine Ellipse.

Es ist jedoch auch möglich, dass die Außenfläche des Kerns in einer Querschnittsansicht eher kreisförmig oder eher rechteckig ist.

Bevorzugt weist der Kern Vorsprünge auf, die sich axial und radial erstrecken, welche als Wegbegrenzung quer zur dynamischen Hauptlastrichtung und/oder in dynamischen Hauptlastrichtung dienen.

Mittels des Elastomerkörpers ist der Kern federnd mit der Hülse verbunden. Unter dem Begriff "Elastomerkörper" soll jedes Material oder Bauteil verstanden werden, mittels wessen eine federnde Befestigung des Kerns an der Hülse erreicht werden kann. Der Elastomerkörper ist somit nicht auf einen Körper aus Elastomer begrenzt. Andere Materialien sind denkbar. Der Elastomerkörper ist insbesondere aus Gummi hergestellt.

Der Elastomerkörper weist vorzugsweise zwei erste Stege und zwei zweite Stege auf, welche sich jeweils in der radialen Richtung erstrecken. Insbesondere sind die beiden ersten Stege an gegenüberliegenden Seiten des Kerns vorgesehen, so dass eine Längserstreckung der ersten Stege entlang einer radialen Richtung erfolgt. Ebenso sind die zweiten Stege an gegenüberliegenden Seiten des Kerns angeordnet. Auch hier ist es möglich, dass sich die beiden zweiten Stege entlang einer radialen Richtung erstrecken. Es ist jedoch auch möglich, dass die beiden zweiten Stege in einem Winkel von weniger als 180° zueinander angeordnet sind.

Erfindungsgemäß sind die zweiten Stege in einem Winkel von 90° (insbesondere $\pm$ 5° $\pm$ 10°) zu den ersten Stegen angeordnet. Auch eine nicht senkrechte Anordnung, d. h. nicht gleich 90° $\pm$ 10° oder 90° $\pm$ 5° ist möglich, jedoch nicht beansprucht; zum Beispiel beträgt der Winkel zwischen dem ersten Steg und dem zweiten Steg 70° oder 75°. Vorzugsweise sind die zweiten Stege spiegelsymmetrisch zu einer Symmetrieebene angeordnet, welche durch die dynamische Hauptlastrichtung und die axiale Richtung des Lagers aufgespannt wird.

Die ersten und zweiten Stege tragen zu der Steifigkeit des Lagers in der dynamischen Hauptlastrichtung bei. Da sich die ersten Stege parallel zu der dynamischen Hauptlastrichtung erstrecken, werden sie bei Vibrationen in der dynamischen Hauptlastrichtung gestaucht und gestreckt. Die zweiten Stege werden bei einer Krafteinwirkung im Wesentlichen senkrecht zu der dynamischen Hauptlastrichtung gestaucht und gestreckt. Bei Vibrationen in der dynamischen Hauptlastrichtung werden die zweiten Stege nicht oder nur wenig gestaucht und gestreckt, sondern auf Schub belastet. Daher tragen die zweiten Stege im Vergleich zu den ersten Stegen tendenziell weniger zu der Steifigkeit in der dynamischen Hauptlastrichtung bei.

Das Massenelement zeichnet sich dadurch aus, dass es eine höhere Dichte als das Material des Elastomerkörpers, insbesondere des zweiten Stegs, aufweist. Insbesondere ist die Dichte des Massenelements größer als die Dichte des zweiten Stegs. Das Massenelement ist zum Beispiel aus Metall, vorzugsweise Aluminium oder Stahl, hergestellt.

Das Massenelement dient als Tilgermasse, welche bei Einwirkung von Vibrationen in der dynamischen Hauptlastrichtung im Wesentlichen parallel zu der Hauptlastrichtung schwingt. Aufgrund der Anordnung des Massenelements in dem zweiten Steg und der zylindrischen Ausgestaltung des Lagers kann jedoch auch eine Komponente der Bewegung des Massenelements in Umfangsrichtung vorgesehen sein.

Ein Volumen des Massenelements ist wesentlich kleiner als das Volumen des zweiten Stegs, insbesondere um das Fünffache, das Zehnfache, das Fünfzigfache. Dabei erstreckt es sich optional im Wesentlichen auf einer parallelen Ebene zu einer durch die axiale Richtung und dynamischen Hauptlastrichtung aufgespannten Ebene. Die Dicke des Massenelements senkrecht zu dieser Ebene ist hingegen in dieser Ausführungsform maximal so dick, wie die Erstreckung in die anderen Richtungen, falls es sich bei dem Massenelement um eine Kugel oder einen Stab handelt. Aufgrund dessen hat das Massenelement einen geringen Einfluss auf die Steifigkeit des zweiten Stegs in der Schubrichtung, d. h. in der dynamischen Hauptbelastungsrichtung und der axialen Richtung. Somit verändert das Massenelement kaum die Steifigkeit des Lagers in der dynamischen Hauptlastrichtung und der axialen Richtung.

Durch geeignete Wahl des Materials des Massenelements und dessen Größe lässt sich die Masse des Massenelements unabhängig von den anderen Bauteilen des Lagers einstellen, da die Steifigkeit des zweiten Stegs in der dynamischen Hauptlastrichtung durch das Vorhandensein des Massenelements nur geringfügig beeinflusst wird.

Die Eigenfrequenz wird über die Masse des Massenelements, das als Tilgermasse dient, dabei so gewählt, dass diese geringfügig kleiner als der gut zu isolierende Frequenzbereich der Vibrationen des ersten Bauteils ist. Hierdurch wird eine signifikante Reduktion der Steifigkeit, teilweise sogar unterhalb der statischen Steifigkeit in dem zu isolierenden Frequenzbereich erreicht, wodurch das Lager kurz oberhalb der Eigenfrequenz besonders weich ist und eine entsprechend gute Isolation von Schwingungen möglich ist. Die anderen Bauteile des Lagers, wie die Hülse, der Kern, die ersten Stege und in vielen Fällen auch die zweiten Stege müssen dazu nicht oder nur wenig verändert werden.

Durch die Anordnung eines Massenelements in jedem der zweiten Stege kann ein symmetrischer Aufbau des Lagers zu einer Symmetrieachse, welche durch die ersten Stege entlang der dynamischen Hauptlastrichtung verläuft, erreicht werden. Ferner ist es möglich, die Gesamtmasse des schwingenden Systems zu erhöhen, da zwei Massenelemente vorgesehen sind. Insbesondere sind die beiden Massenelemente identisch zueinander ausgebildet.

Es ist ferner bevorzugt, dass der Massenschwerpunkt des Massenelements in der radialen Richtung zwischen der Hülse und dem Kern mit einer Position in der radialen Richtung zwischen der Hülse und dem Kern einer maximalen Schwingungsamplitude der Schwingung erster Ordnung des zweiten Stegs annähernd zusammenfällt.

Bei Vibrationen in der dynamischen Hauptlastrichtung werden die zweiten Stege in der dynamischen Hauptlastrichtung, d. h. beispielsweise im Wesentlichen senkrecht zu seiner radialen Erstreckung, ausgelenkt. Bei einer Schwingung erster Ordnung bildet sich somit eine Halbwelle in dem zweiten Steg aus, deren Amplitude annähernd parallel zu der dynamischen Hauptlastrichtung schwingt. Die Position in der radialen Richtung, an der die Amplitude der Schwingung maximal wird, wird als Position maximaler Schwingungsamplitude der Schwingung der ersten Ordnung des zweiten Stegs bezeichnet. Nahe oder exakt an dieser Position in der radialen Richtung ist der Massenschwerpunkt des jeweiligen Massenelements bevorzugt angeordnet. "Annähernd zusammenfällt" bedeutet insbesondere, dass die Abweichung von dem idealen Zusammenfallen nicht mehr als 5 %, 10 % oder 15 % der Länge des zweiten Stegs in der radialen Richtung ausmacht.

Dadurch wird erreicht, dass bei einer Schwingung der ersten Ordnung des zweiten Stegs das Massenelement maximal ausgelenkt wird, so dass ein großer Tilgungseffekt an der Eigenfrequenz und damit eine große Absenkung der dynamischen Steifigkeit und damit eine gute Isolation in einem Frequenzbereich kurz oberhalb der Eigenfrequenz auftritt.

Die Position der maximalen Amplitude der Auslenkung des zweiten Stegs hängt primär von der Länge und der Form des zweiten Stegs ab. Ist diese Position der maximalen Amplitude der Auslenkung des zweiten Stegs einmal bestimmt, kann durch Veränderung der Masse des Massenelements eine Anpassung der Eigenfrequenz und damit des Bereichs einer besonders geringen dynamischen Steifigkeit des Lagers in der dynamischen Hauptlastrichtung angepasst werden. Eine Anpassung der Position des Massenelements in der radialen Richtung an die veränderte Masse ist dabei nicht notwendig.

Es ist bevorzugt, dass das Massenelement den zweiten Steg, insbesondere senkrecht zu der dynamischen Hauptlastrichtung, in zwei Abschnitte trennt.

Das Massenelement kann beispielsweise die Form eines Bleches haben. Um die Masse eines flächigen oder blechförmigen Massenelements zu verändern, können beispielsweise verschiedene Materialien verwendet werden, wie beispielsweise Aluminium oder Stahl.

Darüber hinaus ist es möglich, die Masse des flächigen Massenelements durch die Anpassung von dessen Dicke zu verändern. Beispielsweise hat das Massenelement in seiner flächigen Ausgestaltung eine Dicke von 2 mm in der radialen Richtung, wobei diese Dicke zur Anpassung der Masse bevorzugt zwischen 1 mm und 5 mm variiert werden kann. Die Variation der Dicke des Massenelements hat nur einen sehr geringen Einfluss auf die Steifigkeit des zweiten Stegs in der Schubrichtung, d. h. in der dynamischen Hauptlastrichtung, solange die Dicke des Massenelements im Verhältnis zur Dicke der zweiten Stege gering ist. Die Resonanzfrequenz kann damit um einen Faktor von bis zu 2 verändert werden. Wird gleichzeitig noch das Material des Massenelements beispielsweise von Aluminium auf Stahl verändert, welches auch eine Veränderung beispielsweise um den Faktor 1,7 nach sich zieht, können insgesamt Veränderungen bis um den Faktor 3 bis 4 erreicht werden, ohne die Steifigkeit des Lagers in der dynamischen Hauptlastrichtung signifikant zu verändern.

Das Massenelement in seiner flächigen Ausgestaltung ist erfindungsgemäß parallel zu der Hülse verlaufend gekrümmt. Auf diese Weise lässt sich der zweite Steg so durch das Massenelement unterteilen, dass die lokalen Dicken entlang der Umfangsrichtung in der radialen Richtung weitestgehend konstant eingestellt werden können. Insbesondere ist vorgesehen, dass das Massenelement den zweiten Steg in zwei Teile trennt. Dies bedeutet, dass das Massenelement eine solch flächige Ausgestaltung hat, welche in der Umfangsrichtung und/oder der axialen Richtung größer als der zweite Steg ist. Das zweite Massenelement steht in der Umfangsrichtung und/oder in der axialen Richtung über den zweiten Steg hervor.

Es ist bevorzugt, dass der zweite Steg eine Ausnehmung aufweist, in welcher das Massenelement angeordnet ist. Hierdurch steigert das Einbinden des Massenelements die Steifigkeit quer zur dynamischen Hauptlastrichtung kaum; die Ausnehmung in Zusammenwirkung mit dem platzierten Massenelement kann sogar so gestaltet werden, dass die Steifigkeit gegenüber der Geometrie des zweiten Stegs ohne Ausnehmung herabgesetzt wird. Es ist weiter bevorzugt, dass das Massenelement formschlüssig gehalten ist, insbesondere durch die Ausnehmung. Beispielsweise weist die Ausnehmung eine Größe auf, welche kleiner ist als die Größe des Massenelements, so dass das Massenelement kraftschlüssig gehalten ist. Ferner ist es möglich, dass die Ausnehmung einen Formschluss mit dem Massenelement erreicht. Somit ist es in dieser Ausgestaltung nicht notwendig, das Massenelement an dem zweiten Steg anzuvulkanisieren. Dies stellt eine weitere Art der Befestigung des Massenelements an dem zweiten Steg dar.

Beispielsweise, in nicht beanspruchten Ausführungsformen, in denen das Massenelement kugelförmig ist, kann die Ausnehmung eine kugelförmige Auswölbung in dem zweiten Steg aufweisen, die durch einen oder mehrere Kanäle mit der Umgebung verbunden ist. Auf diese Weise kann das Massenelement in die Auswölbung eingeschossen werden. Bei einer stabförmigen Ausgestaltung des Massenelements kann das Massenelement kraftschlüssig in dem zweiten Steg gehalten werden. Bei einer ringförmigen Ausgestaltung des Massenelements kann das Massenelement in einer außenseitig um den zweiten Steg herum erstreckende Ausnehmung platziert werden. Somit kann das Massenelement auch formschlüssig an dem zweiten Steg gehalten werden.

Es ist bevorzugt, dass das Massenelement eine Ausdehnung in der dynamischen Hauptlastrichtung hat, welche kleiner als die Ausdehnung des zweiten Stegs in der dynamischen Hauptlastrichtung an der Stelle des Massenelements ist, insbesondere die Hälfte, ein Drittel oder ein Viertel. Durch diese Ausgestaltung soll sichergestellt werden, dass der zweite Steg nicht durch das Massenelement in zwei Abschnitte getrennt wird.

Die Summe der Länge der Teilabschnitte der zweiten Stege in der radialen Richtung ist größer als die Summe der Längen der ersten Stege in der radialen Richtung. Dies bedeutet, dass das der Erfindung zugrunde liegende Prinzip für unterschiedlichste Konfigurationen des ersten und zweiten Stegs verwendet werden kann.

Es ist bevorzugt, dass das Massenelement, das in einem zweiten Steg angeordnet ist, eine andere Masse aufweist, als das Massenelement, das in dem anderen zweiten Steg angeordnet ist.

Dadurch kann erreicht werden, dass bei zwei verschiedenen Frequenzen eine Absenkung der dynamischen Steifigkeit erreicht wird. Somit kann das Lager in einer solchen Ausgestaltung vorgesehen sein, um in zwei verschiedenen Frequenzbereichen gut zu isolieren.

Es ist erfindungsgemäß vorgesehen, dass das Lager einen Anschlag aufweist, welche die Auslenkung des Kerns gegenüber der Hülse in der dynamischen Hauptlastrichtung und/oder senkrecht zu der dynamischen Hauptlastrichtung begrenzt, wobei vorzugsweise der Anschlag einen an dem Kern angeordneten Vorsprung aufweist.

Mittels des Anschlags soll die Auslenkung des Kerns in der dynamischen Hauptlastrichtung begrenzt werden, um Beschädigungen an dem ersten Steg durch eine zu große Dehnung des ersten Stegs in der dynamischen Hauptlastrichtung zu vermeiden. Ferner kann mit Hilfe des Anschlags auch eine ungewollte Belastung des zweiten Stegs vermieden werden, beispielsweise eine zu große Auslenkung des zweiten Stegs senkrecht zu der dynamischen Hauptlastrichtung. Dazu kann der Anschlag einen Vorsprung aufweisen, der an dem Kern und/oder an der Hülse angeordnet ist. Vorzugsweise steht der Kern im Winkel von ca. 45° zu der dynamischen Hauptlastrichtung vor, um gleichzeitig eine Begrenzung in der dynamischen Hauptlastrichtung als auch senkrecht zu der dynamischen Hauptlastrichtung zu erzeugen.

Es ist bevorzugt, dass der Anschlag vier auf dem Kern angeordnete Vorsprünge umfasst, wobei jeweils ein Paar von zwei Vorsprüngen zu beiden Seiten der ersten Stege angeordnet sind.

Optional bilden vier Vorsprünge den Anschlag, wobei insbesondere die Vorsprünge auf beiden Seiten der ersten Stege angeordnet sind. Vorzugsweise sind die Vorsprünge symmetrisch zu einer Symmetrieachse angeordnet sind, welche durch die ersten Stege verläuft. Gegenüber den Vorsprüngen, beispielsweise einem Kern oder einer Hülse, kann ein Gummikörper zur Dämpfung des Aufpralls des Vorsprungs angeordnet sein.

Die Erfindung wird anhand der beiliegenden Zeichnungen näher erläutert. Darin zeigen

Figur 1    eine schematische Darstellung eines Fahrzeugs, in dem schematisch eine Fahrzeugaufhängung vorgesehen ist;

Figur 2    eine Querschnittsansicht eines Lagers in einer befestigten Position;

Figur 3    eine Querschnittsansicht einer ersten Ausführungsform des Lagers;

Figur 4    eine weitere Querschnittsansicht des Lagers von Figur 3, in der die Schwingungsverhältnisse skizziert sind;

Figur 5    eine Querschnittsansicht einer weiteren Ausführungsform des erfindungsgemäßen Lagers;

Figur 6    eine Querschnittsansicht einer weiteren Ausführungsform eines nicht beanspruchten Lagers; und

Figur 7    ein Diagramm, das die Steifigkeit des Lagers abhängig von der Frequenz der Vibrationen für verschiedene Massen eines Massenelements und im Vergleich zu einem herkömmlichen Lager zeigt.

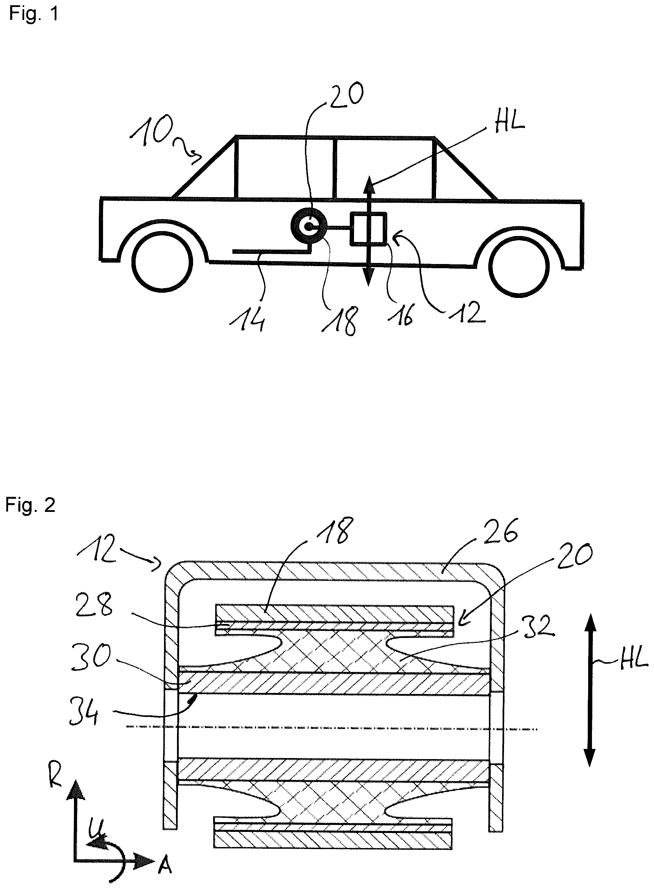

Figur 1 zeigt eine schematische Ansicht eines Fahrzeugs 10, bei der schematisch eine Fahrzeugaufhängung 12 dargestellt ist. Die Position und Größe der Fahrzeugaufhängung 12 entspricht nicht den tatsächlichen Abmessungen, sondern dient lediglich zur Illustration. Die Fahrzeugaufhängung 12 umfasst ein Chassis 14, ein erstes Bauteil 16 und ein Lager 20. Das Chassis 14 des Fahrzeugs 10 ist nur teilweise dargestellt.

Das erste Bauteil 16, wie beispielsweise ein Getriebe, ein Hinterachsdifferential oder ein Elektromotor, ist an dem Chassis 14 befestigt. Dazu weist das Chassis 14 eine Aufnahme 18 auf, welche eine zylindrische Innenfläche aufweist. In der Aufnahme 18 ist ein Lager 20 vorgesehen, das mittels eines Bolzens (nicht dargestellt) und Muttern (nicht dargestellt) mit einer Aufhängung 26 des ersten Bauteils 16 verbunden ist (siehe insbesondere Figur 2). Das Lager 20 erlaubt eine federnde Befestigung des ersten Bauteils 16 an dem Chassis 14.

Das erste Bauteil 16 erzeugt Vibrationen entlang einer dynamischen Hauptlastrichtung HL, welche beispielsweise parallel zu der Schwerkraft angeordnet ist. Die Vibrationen des ersten Bauteils 16 können durch Zahnradeingriffe von Zahnrädern, welche das erste Bauteil 16 umfasst, erzeugt werden. Die Vibrationen, welche durch das erste Bauteil 16 erzeugt werden, treten insbesondere an einer bestimmten Frequenz verstärkt auf. Zur Isolation dieser Frequenzen, welche von dem ersten Bauteil 16 erzeugt werden, ist das Lager 20 vorgesehen.

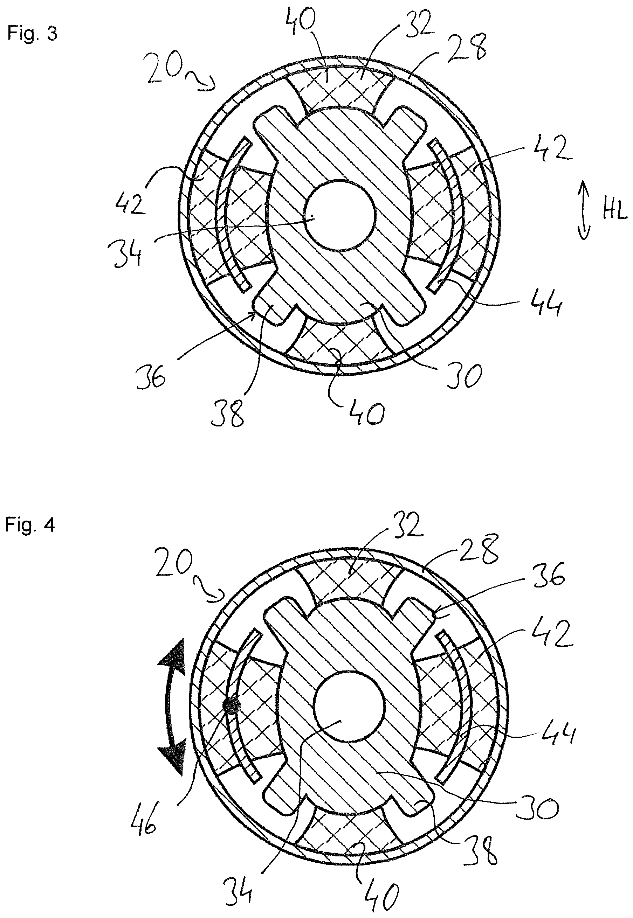

Wie dies aus Figuren 2 und 3 ersichtlich ist, weist das Lager 20 eine zylindrische Hülse 28, einen Kern 30 und ein Elastomerlager 32 auf. Die Hülse 28 kann die Form eines zylindrischen Körpers aufweisen, der sich vorzugsweise in einer axialen Richtung A erstreckt. Die Hülse 28 kann, wie in den Figuren 3 bis 6 gezeigt, im Querschnitt kreisförmig sein.

Der Kern 30 weist eine Durchgangsöffnung 34 auf, welche sich in der axialen Richtung A erstreckt. Durch die Durchgangsöffnung 34 kann der Bolzen durchgeführt werden. Der Kern 30 ist, wie in den Figuren 2 bis 6 gezeigt, einteilig ausgebaut. Der Kern 30 ist mittels des Elastomerkörpers 32 an der Hülse 28 befestigt. Der Elastomerkörper 32 erlaubt eine federnde Lagerung des Kerns 30 an der Hülse 28. Der Elastomerkörper 32 ist nicht auf ein elastomeres Material begrenzt, son-

**EP 3 679 267 B1**

dern kann aus jedem Material hergestellt sein, das eine federnde Befestigung des Kerns 30 an der Hülse 28 erlaubt.

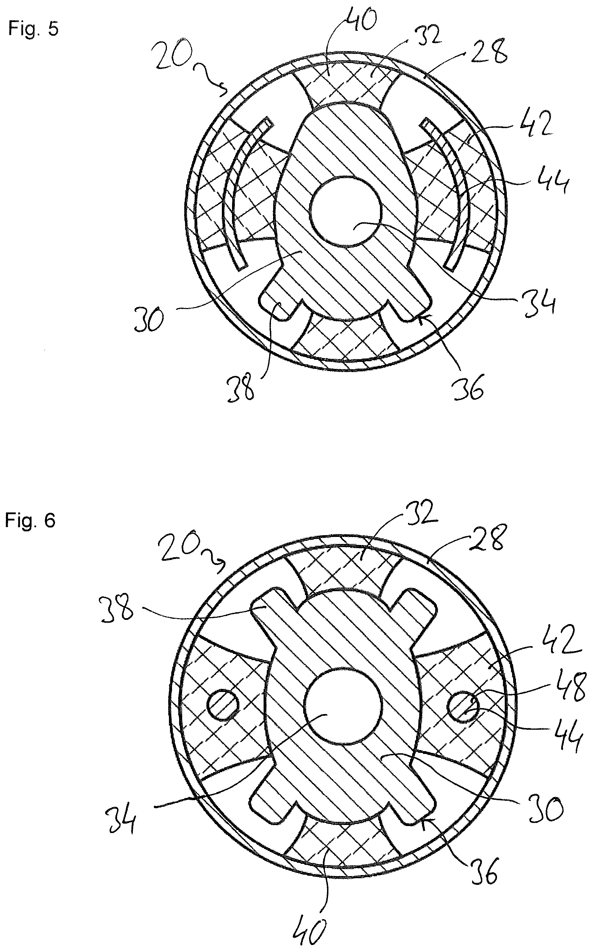

Das Lager 20 kann ferner mit einem Anschlag 36 versehen sein, der die Auslenkung des Kerns 30 gegenüber der Hülse 28 senkrecht zur dynamischen Hauptlastrichtung HL und/oder in der dynamischen Hauptlastrichtung HL begrenzt. Der Anschlag 36 kann ein, zwei (siehe Figur 5), vier (siehe Figuren 3 und 6) oder mehr Vorsprünge 38 aufweisen. Die Vorsprünge 38 können an dem Kern 30 oder an der Hülse 28 angeordnet sein. Vorzugsweise sind die Vorsprünge 38 einstückig mit dem Kern 30 ausgebildet. Die Vorsprünge 38 stehen insbesondere in einem Winkel von 45° gegenüber der dynamischen Hauptlastrichtung HL von dem Kern 30 vor. Dadurch kann eine Begrenzung der Auslenkung des Kerns 30 gegenüber der Hülse 28 sowohl in der dynamischen Hauptlastrichtung HL als auch senkrecht dazu erreicht werden. Die Vorsprünge 38 sind vorzugsweise symmetrisch zu einer Symmetrieachse angeordnet, welche zentral durch das Lager 20 verläuft und parallel zu der dynamischen Hauptlastrichtung HL verläuft. Dies bedeutet, die Vorsprünge 38 sind in dieser Ausführungsform auf beiden Seiten der ersten Stege 38 angeordnet.

Der Elastomerkörper 32 weist optional zwei erste Stege 40, zwei zweite Stege 42 und wenigstens ein Massenelement 44 auf. Die ersten Stege 40 sind gegenüberliegend angeordnet und erstrecken sich jeweils in der radialen Richtung R, insbesondere parallel zu der dynamischen Hauptlastrichtung HL. Die zweiten Stege 42 sind in der Ausführungsform gemäß Figuren 3 und 4 senkrecht zu der dynamischen Hauptlastrichtung HL angeordnet und erstrecken sich ebenfalls in der radialen Richtung R. Die Summe der Länge der Teilabschnitte der zweiten Stege 42 in der radialen Richtung R ist in der gezeigten Ausführungsform größer als die Summe der Längen der ersten Stege 40 in der radialen Richtung R. Dazu kann der Kern 30 eine im Querschnitt ellipsenähnliche Ausgestaltung besitzen, wobei die Längsachse dieser Ellipse sich entlang der dynamischen Hauptlastrichtung HL erstreckt und die kurze Seite senkrecht dazu. Aufgrund dieser Ausgestaltung ist die Steifigkeit der ersten Stege 40 in der dynamischen Hauptlastrichtung HL höher als die Steifigkeit der zweiten Stege 42 in dynamischer Hauptlastrichtung HL. Darüber hinaus tragen allgemein und im Besonderen aufgrund der in den Figuren 3 und 4 gezeigten Ausgestaltung der zweiten Stege 42, die zweiten Stege 42 vergleichsweise wenig zu der Steifigkeit des Lagers 20 in der dynamischen Hauptlastrichtung HL bei. Die Erfindung ist jedoch nicht auf diese Ausführungsform begrenzt. Die Länge der zweiten Stege 40 in der radialen Richtung R kann kleiner als die Länge der ersten Stege 38 in der radialen Richtung R sein.

Das wenigstens eine Massenelement 44 ist in dem zweiten Steg 42 vorgesehen. In den in den Figuren gezeigten Ausführungsformen sind zwei Massenelemente 44 vorgesehen, wobei in jedem zweiten Steg 42 ein Massenelement 44 vorgesehen ist. Das Massenelement 44 weist eine Dichte auf, welche größer als die Dichte des zweiten Stegs 42 ist. Das Massenelement 44 kann beispielsweise aus Metall, insbesondere Aluminium oder Stahl, hergestellt sein. In der in den Figuren 3 bis 5 gezeigten Ausführungsform ist das Massenelement 44 an die zweiten Stege anvulkanisiert.

Das Massenelement 44 ist in einer solchen Position in der radialen Richtung R zwischen dem Kern 30 und der Hülse 28 vorgesehen, dass ein Massenschwerpunkt 46, wie in der Figur 4 eingezeichnet ist, an einem Ort angeordnet ist, an welchem eine erste Ordnung der Eigenschwingung des zweiten Stegs 42 seine maximale Amplitude zeigt. Bei einer Auslenkung des Kerns 30 gegenüber der Hülse 28 zeigt jeder der zweiten Stege 42 eine Schwingung in die dynamischen Hauptlastrichtung HL. Eine erste Ordnung dieser Schwingung zeigt eine Halbwelle, deren maximale Amplitude ungefähr oder gleich auf der Höhe in der radialen Richtung R angeordnet ist, an der der Massenschwerpunkt 46 angeordnet ist. Eine solche Anordnung des Massenelements 44 hat zur Folge, dass das Massenelement 44 oberhalb der Eigenfrequenz des zweiten Stegs 42 mit maximaler gegenphasiger Amplitude schwingt und die Absenkung der dynamischen Steifigkeit ebenfalls maximiert wird.

Die Schwingung des Massenelements 44 erfolgt primär entlang der Hauptlastrichtung HL, kann jedoch aufgrund der Ausgestaltung des Lagers 20 als zylindrisches Element Anteile in der Umfangsrichtung U aufweisen, wie dies durch den Doppelpfeil in Figur 4 eingezeichnet ist.

Das Massenelement 44 hat in den Ausführungsformen gemäß Figuren 3 bis 5 eine flächige Ausgestaltung, insbesondere hat das Massenelement 44 die Form eines Blechs. Das Massenelement 44 hat eine solche Abmessung sowohl in der Umfangsrichtung U als auch in der axialen Richtung A, dass das Massenelement 44 in der Umfangsrichtung U und/oder in der axialen Richtung A über den zweiten Steg 42 hinaus vorsteht. Das Massenelement 44 unterteilt somit den zweiten Steg 42 in zwei Abschnitte oder Teile entlang der radialen Richtung R. Das Massenelement 44 kann, so wie in den Figuren 3 bis 5 gezeigt, parallel zu der Hülse 28 gekrümmt sein. Dies ist jedoch nicht zwingend. Das Massenelement 44 kann sich auch parallel zu der dynamischen Hauptlastrichtung HL erstrecken.

Die Ausführungsform des Lagers 20 gemäß Figur 5 unterscheidet sich von der Ausführungsform des Lagers 20 gemäß Figuren 3 und 4 nur durch die im Folgenden beschriebenen Unterschiede. Die zweiten Stege 42 gemäß der Ausführungsform von Figur 5 sind nicht senkrecht zu der dynamischen Hauptlastrichtung HL angeordnet, sondern in einem Winkel ungleich 90°. Im vorliegenden Fall in einem Winkel von ca. 75° zu der dynamischen Hauptlastrichtung HL. Sowohl die zweiten Stege 42 als auch die Massenelemente 44 sind weitestgehend symmetrisch zu einer Symmetrieachse, welche durch die ersten Stege 40 verläuft, angeordnet. Ferner sind nur zwei Vorsprünge 38 an dem Kern 30 vorgesehen.

Die Ausführungsform des Lagers 20 gemäß Figur 6 unterscheidet sich von den Ausführungsformen des Lagers 20 gemäß den Figuren 3 und 4 nur bis auf die folgenden Unterschiede. Das Massenelement 44 hat einen kreisförmigen Querschnitt und kann folglich die Form einer Kugel oder eines Stabes annehmen, wobei der zweite Steg 42 eine Ausnehmung 48 aufweist, in der das Massenelement 44 formschlüssig gehalten wird. Dazu kann die Ausnehmung 48 mit der Umgebung des zweiten Stegs 42 durch einen Durchgang verbunden sein, über welchen das Massenelement 44 in die Ausnehmung 48 eingeschossen werden kann. Das Massenelement 44 gemäß Figur 6 ist somit nicht an den zweiten Steg 42 anvulkanisiert.

Es ist auch möglich, dass das Massenelement 44 stabförmig oder ringförmig ausgebildet ist. Ferner kann das Massenelement 44 kraftschlüssig in dem zweiten Steg 42 gehalten sein. Dazu kann die Ausnehmung 48 eine Innenabmessung haben, welche kleiner ist als die Außenabmessung des Massenelements 44. Im Falle eines ringförmig ausgebildeten Massenelementes 44 kann dieses auch außen um den zweiten Steg 40 gelegt sein und dort mittels einer nutförmigen, außenumlaufenden Ausnehmung 48 mittels Formschluss gehalten werden.

Ferner ist es möglich, dass die Masse des Massenelements 44 des einen zweiten Stegs 42 sich von der Masse des Massenelements 44 des anderen zweiten Stegs 42 unterscheidet.

Die Funktionsweise des Lagers 20 ist wie folgt. Das erste Bauteil 16 erzeugt Vibrationen in der dynamischen Hauptlastrichtung HL, welche parallel zu der Erstreckung der ersten Stege 40 verläuft. Aufgrund dessen tragen die ersten Stege 40 maßgeblich die dynamische Last. Bei der Auslenkung des Kerns 30 gegenüber der Hülse 28 aufgrund von Vibrationen in der dynamischen Hauptlastrichtung HL, beginnen die Massenelemente 44, wie in Figur 4 gezeigt, zu schwingen. Diese Schwingung weist eine Eigenfrequenz auf, welche durch die Masse des Massenelements 44 als auch durch die Steifigkeit der zweiten Stege 42 parallel zu der dynamischen Hauptlastrichtung **HL** bestimmt wird. Ist nun die Frequenz der Vibrationen ein wenig höher als die Eigenfrequenz des Stegs 42 mit dem enthaltenden Massenelement 44, so schwingt dieses gegenphasig zur Anregung. Hieraus ergeben sich nun zwei entgegengesetzte Kraftvektoren: einmal aus Anregungsamplitude und Gesamtfedersteifigkeit des Lagers 20 und einmal aus der gegenphasig schwingenden Wegamplitude des Massenelementes 44 bzw. der Tilgermasse und der Steifigkeiten, mit der die Tilgermasse durch den zweiten Stege 42 angebunden ist. Die Summe beider Kraftvektoren ergibt die resultierende Kraft. Die resultierende dynamische Steifigkeit wiederum ergibt sich aus dem Quotienten dieser resultierenden Kraft und der ursprünglichen Auslenkung. So kann eine signifikante Absenkung der dynamischen Steifigkeit in der dynamischen Hauptlastrichtung **HL** in diesem Frequenzbereich erreicht werden. Aufgrund der Absenkung der dynamischen Steifigkeit des Lagers 20 in der dynamischen Hauptlastrichtung **HL** können bestimmte Frequenzen der durch das erste Bauteil 16 hervorgerufenen Vibrationen besonders effektiv isoliert werden.

Bislang war es notwendig, für jeden besonders gut zu isolierenden Frequenzbereich ein neues Design des Lagers 20 vorzusehen, bei dem der Elastomerkörper 32 entsprechend der einzustellenden Steifigkeiten und Eigenfrequenzen abgestimmt werden musste. Dies war sehr aufwändig, da sich die Eigenfrequenzen des Elastomerkörpers 32 aus der durch die Steifigkeitsforderungen an das Lager 20 angepassten Geometrie automatisch ergaben. Eine Abstimmung bzw. Anpassung der Eigenfrequenz über die Geometrie des Elastomerkörpers 32 hatte wiederum einen großen Einfluss auf die sich ergebenden Steifigkeiten. Dies ist mit dem erfindungsgemäßen Lager 20 nicht länger notwendig, da die Einstellung von Steifigkeiten und Eigenfrequenzen stark voneinander entkoppelt sind. Um die Eigenfrequenz des Massenelemente 44 zu ändern und damit das Lager 20 an den kritischen, gut zu isolierenden Frequenzbereich der Vibrationen des ersten Bauteils 16 anzupassen, ist es hier lediglich notwendig, die Masse des Massenelements 44 zu verändern. Auf diese Weise lässt sich auch die Planung für ein neues Lager 20 vereinfachen. Denn die Einstellung der Steifigkeit in der dynamischen Hauptlastrichtung **HL** kann weitestgehend unabhängig von dem Frequenzbereich guter Isolation geplant werden. Kopplungswirkungen zwischen diesen beiden Effekten brauchen nicht oder nur wenig berücksichtigt werden.

Die Einstellung kann dadurch erfolgen, dass verschiedene Materialien für das Massenelement 44 vorgesehen sind. Darüber hinaus können beispielsweise die Dicke oder andere Abmessungen des Massenelements 44 verändert werden. Die Veränderung des Materials des Massenelements 44 als auch die Veränderung der Dicke oder der Ausdehnung des Massenelements 44 hat keinen bzw. nur einen geringen Einfluss auf die Steifigkeit des zweiten Stegs 42 in der dynamischen Hauptlastrichtung HL. Nichtsdestotrotz kann dadurch die Eigenfrequenz des Massenelements 44 in der Größenordnung eines Faktors 4 verändert werden. Darüber hinaus hat die Veränderung des Massenelements 44 kaum Einfluss auf die statische Steifigkeit des Lagers 20, da der erste Steg 40, durch die Veränderung des Massenelements 44 nicht oder nur geringfügig verändert werden muss und der Einfluss des Masseelementes 44 auf die Steifigkeit der zweiten Stege 42 in Hauptlastrichtung **HL** bzw. Schubrichtung ebenfalls gering ist. Somit können durch eine relativ simple Anpassung des Massenelements 44 die Eigenfrequenz des Lagers 20 verändert werden, ohne dass weitere Bauteile des Lagers 20 stark verändert werden müssen. Eine Anpassung des Isolationsbereichs des Lagers 20 an die Problemfrequenz der Vibrationen des ersten Bauteils 16 lässt sich somit auf einfache Art und Weise realisieren.

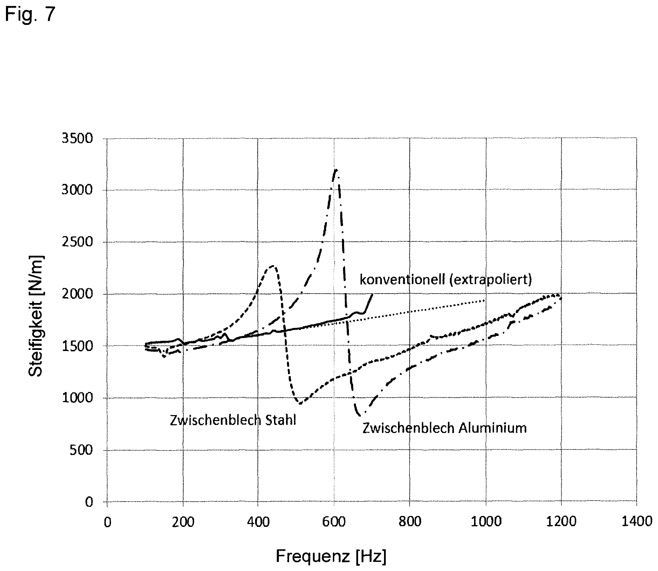

Der Einfluss des Materials des Massenelements 44 und damit von dessen Masse auf die dynamische Steifigkeit ist aus Figur 7 gut ersichtlich. Die gestrichelte Linie stellt die frequenzabhängige Steifigkeit des Lagers 20 in der Hauptlastrichtung HL bei einem aus Stahl hergestellten und als Blech geformten Massenelement 44 dar, während sich die gepunktet-gestrichelte Linie auf ein Lager 20 auf ein aus Aluminium hergestelltes und als Blech geformtes Massenelement 44 bezieht. Die beiden Lager 20 unterscheiden sich nur durch das Material des Massenelements 44 und somit durch die Masse des Massenelements 44. Aufgrund des Unterschieds der Masse des Massenelements 44 ergibt sich die in Figur 7 gut sichtbare Verschiebung des Frequenzbereichs der verringerten Steifigkeit. Die Verringerung der Steifigkeit der beiden Lager 20 ist besonders im Vergleich zu der Steifigkeit eines herkömmlichen Lagers ohne Massenelement 44 ersichtlich, wie diese durch die durchgezogene Linie (gemessene Steifigkeit) und durch die fein gestrichelte Linie (extrapolierte Steifigkeit) dargestellt ist.

Wenn die Massen der Massenelemente 44 des einen und des anderen zweiten Stegs 42 ungleich sind, lassen sich mit dem Lager 20 in zwei verschiedenen Frequenzbereichen Isolationseffekte erzeugen. Auch hier kann eine Anpassung der jeweiligen Eigenfrequenzen durch die Anpassung der Masse der Massenelemente 44 erreicht werden.

Bezugszeichenliste

| | |
|---|---|
| 10 | Fahrzeug |
| 12 | Fahrzeugaufhängung |
| 14 | Chassis |
| 16 | erstes Bauteil |
| 18 | Aufnahme |
| 20 | Lager |
| 26 | Aufhängung |
| 28 | Hülse |
| 30 | Kern |
| 32 | Elastomerkörper |
| 34 | Durchgangsöffnung |
| 36 | Anschlag |
| 38 | Vorsprung |
| 40 | erster Steg |
| 42 | zweiter Steg |
| 44 | Massenelement |
| 46 | Massenschwerpunkt |
| 48 | Ausnehmung |
| A | axiale Richtung |
| R | radiale Richtung |
| U | Umfangsrichtung |
| HL | dynamische Hauptlastrichtung |

**Patentansprüche**

1. Lager zur Isolation von Vibrationen entlang einer dynamischen Hauptlastrichtung (HL), umfassend

   eine zylindrische Hülse (28),
   einen Kern (30), der in der Hülse (28) angeordnet ist, und
   einen Elastomerkörper (32), der den Kern (30) mit der Hülse (28) federnd verbindet, wobei der Elastomerkörper (32) erste Stege (40), welche in der dynamischen Hauptlastrichtung (HL) zwischen dem Kern (30) und der Hülse (28) angeordnet sind und den Kern (39) und die Hülse (28) federnd verbinden, und zweite Stege (42), die ebenfalls den Kern (39) und die Hülse (28) federnd verbinden und die in einem Winkel, senkrecht, zu den ersten Stegen (40) zwischen dem Kern (30) und der Hülse (28) angeordnet sind, aufweist,
   wobei in mindestens einem der zweiten Stege (42) ein Massenelement (44) angeordnet ist,
   wobei das Massenelement (44) in seiner flächigen Ausgestaltung parallel zu der Hülse (28) verlaufend gekrümmt ist,
   wobei das Lager einen Anschlag (36) umfasst, welcher die Auslenkung des Kerns (30) gegenüber der Hülse (28) in der dynamischen Hauptlastrichtung (HL) und/oder senkrecht zu der dynamischen Hauptlastrichtung (HL) begrenzt.

2. Lager nach Anspruch 1, **dadurch gekennzeichnet, dass** der Massenschwerpunkt (46) des Massenelements (44) in einer radialen Richtung (R) zwischen der Hülse (28) und dem Kern (30) mit einer Position in der radialen Richtung (R) zwischen der Hülse (28) und dem Kern (30) einer maximalen Schwingungsamplitude der Schwingung erster Ordnung des zweiten Stegs (42) annähernd zusammenfällt.

3. Lager nach Anspruch 1 oder 2, **dadurch gekennzeichnet, dass** das Massenelement (44) den zweiten Steg (42) in zwei Teile trennt.

4. Lager nach Anspruch 1 oder 2, **dadurch gekennzeichnet, dass** der zweite Steg (42) eine Ausnehmung (48) aufweist, in welcher das Massenelement (44) angeordnet ist.

5. Lager nach Anspruch 4, **dadurch gekennzeichnet, dass** das Massenelement (44) formschlüssig in der Ausnehmung (48) gehalten ist.

6. Lager nach einem der Ansprüche 1 bis 5, **dadurch gekennzeichnet, dass** das Massenelement (44) des einen zweiten Stegs (42) eine andere Masse als das Massenelement (44) des anderen zweiten Stegs (42) aufweist.

7. Lager nach einem der voranstehenden Ansprüche, **dadurch gekennzeichnet, dass** der Anschlag (36) einen an dem Kern (30) und/oder der Hülse (28) angeordneten Vorsprung (38) umfasst.

8. Lager nach Anspruch 7, **dadurch gekennzeichnet, dass** der Anschlag (36) vier auf dem Kern (30) angeordnete Vorsprünge (38) umfasst, wobei jeweils ein Paar von zwei Vorsprüngen (38) zu beiden Seiten der ersten Stege (40) angeordnet sind.

9. Fahrzeugaufhängung, umfassend

ein erstes Bauteil (16), das Vibrationen in einer dynamischen Hauptlastrichtung (HL) erzeugt, ein Chassis (14), und ein Lager (20) nach einem der voranstehenden Ansprüche, welches das erste Bauteil (16) federnd an dem Chassis (14) lagert, wobei sich die ersten Stege (40) des Lagers (20) in der dynamischen Hauptlastrichtung (HL) erstrecken.

**Claims**

1. Bearing for isolating vibrations along a dynamic main load direction (HL), comprising a cylindrical sleeve (28),

a core (30) disposed within the sleeve (28), and an elastomeric body (32) resiliently connecting the core (30) to the sleeve (28), wherein the elastomeric body (32) has first webs (40) which are arranged in the dynamic main load direction (HL) between the core (30) and the sleeve (28) and resiliently connect the core (39) and the sleeve (28), and second webs (42) which also resiliently connect the core (39) and the sleeve (28) and are arranged at an angle perpendicular to the first webs (40) between the core (30) and the sleeve (28), wherein a mass element (44) is arranged in at least one of the second webs (42), wherein the mass element (44) is curved in its flat design so as to run parallel to the sleeve (28), wherein the bearing comprises a stop (36) which limits the deflection of the core (30) relative to the sleeve (28) in the dynamic main load direction (HL) and/or perpendicular to the dynamic main load direction (HL).

2. Bearing according to claim 1, **characterised in that** the centre of mass (46) of the mass element (44) in a radial direction (R) between the sleeve (28) and the core (30) approximately coincides with a position in the radial direction (R) between the sleeve (28) and the core (30) with a maximum vibration amplitude of the first-order vibration of the second web (42).

3. Bearing according to claim 1 or 2, **characterised in that** the mass element (44) separates the second web (42) into two parts.

4. Bearing according to claim 1 or 2, **characterised in that** the second web (42) has a recess (48) in which the mass element (44) is arranged.

5. Bearing according to claim 4, **characterised in that** the mass element (44) is held in the recess (48) by a positive fit.

6. Bearing according to one of claims 1 to 5, **characterised in that** the mass element (44) of one second web (42) has a different mass than the mass element (44) of the other second web (42).

7. Bearing according to one of the preceding claims, **characterised in that** the stop (36) comprises a projection (38) arranged on the core (30) and/or the sleeve (28).

8. Bearing according to claim 7, **characterised in that** the stop (36) comprises four projections (38) arranged on the core (30), with a pair of two projections (38) arranged on either side of the first webs (40).

9. Vehicle suspension comprising

a first component (16) that generates vibrations in a main dynamic load direction (HL), a chassis (14), and a bearing (20) according to one of the preceding claims, which resiliently supports the first component (16) on the chassis (14), wherein the first webs (40) of the bearing (20) extend in the dynamic main load direction (HL).

**Revendications**

1. Palier pour isoler les vibrations le long d'une direction de charge dynamique principale (HL), comprenant

un manchon cylindrique (28), un noyau (30) disposé dans le manchon (28), et un corps en élastomère (32) qui relie de manière élastique le noyau (30) au manchon (28), le corps en élastomère (32) comportant des premières nervures (40) qui sont disposées dans la direction de charge dynamique principale (HL) entre le noyau (30) et le manchon (28) et relient de manière élastique le noyau (39) et le manchon (28), et des deuxièmes nervures (42) qui relient également de manière élastique le noyau (39) et le manchon (28) et qui sont disposées à un angle perpendiculaire aux premières nervures (40) entre le noyau (30) et le manchon (28),

un élément de masse (44) étant disposé dans au moins l'une des deuxièmes nervures (42),

l'élément de masse (44) étant courbé dans sa configuration plane parallèlement au manchon (28),

le palier comprenant une butée (36) qui limite la déviation du noyau (30) par rapport au manchon (28) dans la direction de la charge dynamique principale (HL) et/ou perpendiculairement à la direction de la charge dynamique principale (HL).

2. Palier selon la revendication 1, **caractérisé en ce que** le centre de gravité (46) de l'élément de masse (44) dans une direction radiale (R) entre le manchon (28) et le noyau (30) coïncide approximativement avec une position dans la direction radiale (R) entre le manchon (28) et le noyau (30) d'une amplitude d'oscillation maximale de l'oscillation de premier ordre de la deuxième nervure (42).

3. Palier selon la revendication 1 ou 2, **caractérisé en ce que** l'élément de masse (44) sépare la deuxième nervure (42) en deux parties.

4. Palier selon la revendication 1 ou 2, **caractérisé en ce que** la deuxième nervure (42) présente un évidement (48) dans lequel est disposé l'élément de masse (44).

5. Palier selon la revendication 4, **caractérisé en ce que** l'élément de masse (44) est maintenu par complémentarité de forme dans l'évidement (48).

6. Palier selon l'une des revendications 1 à 5, **caractérisé en ce que** l'élément de masse (44) de l'une des deuxièmes nervures (42) présente une masse différente de celle de l'élément de masse (44) de l'autre deuxième nervure (42).

7. Palier selon l'une des revendications précédentes, **caractérisé en ce que** la butée (36) comprend une saillie (38) disposée sur le noyau (30) et/ou le manchon (28).

8. Palier selon la revendication 7, **caractérisé en ce que** la butée (36) comprend quatre saillies (38) disposées sur le noyau (30), une paire de deux saillies (38) étant disposée de chaque côté des premières nervures (40).

9. Suspension de véhicule comprenant

un premier composant (16) qui génère des vibrations dans une direction de charge dynamique principale (HL),

un châssis (14), et

un palier (20) selon l'une des revendications précédentes, qui supporte de manière élastique le premier composant (16) sur le châssis (14), les premières nervures (40) du palier (20) s'étendant dans la direction de charge dynamique principale (HL).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2716485 C2
- KR 101372085 B1

- US 6641119 B2